# EUROPEAN PATENT APPLICATION

(11) **EP 4 712 173 A1**
(43) Date of publication of application: **18.03.2026**
(21) Application number: 25201876.7
(22) Date of filing: 12.09.2025
(51) Int. Cl.: H01M 4/66, B32B 15/08

(54) **COMPOSITE SUBSTRATE FOR RECHARGEABLE LITHIUM BATTERY AND RECHARGEABLE LITHIUM BATTERY INCLUDING THE SAME**

(30) Priority: 12.09.2024 KR 20240124611
(71) Applicant: SAMSUNG SDI CO., LTD., Yongin-si, Gyeonggi-do 17084 (KR)
(72) Inventor: KIM, Junyoung, 17084 Yongin-si, Gyeonggi-do (KR); LEE, Wonhyung, 17084 Yongin-si, Gyeonggi-do (KR); KIM, Suhyun, 17084 Yongin-si, Gyeonggi-do (KR); CHA, Jungwook, 17084 Yongin-si, Gyeonggi-do (KR); LEE, KyuSeo, 17084 Yongin-si, Gyeonggi-do (KR); YOON, Yeonhee, 17084 Yongin-si, Gyeonggi-do (KR); KANG, Dayoung, 17084 Yongin-si, Gyeonggi-do (KR); KWON, Minseok, 17084 Yongin-si, Gyeonggi-do (KR); WOO, Seokho, 17084 Yongin-si, Gyeonggi-do (KR)
(74) Representative: Bardehle Pagenberg Partnerschaft mbB Patentanwälte Rechtsanwälte

(57) **Abstract**

Provided is a composite substrate for a rechargeable lithium battery that includes a support layer including a polymer film, and a metal layer disposed on the support layer and including at least any one of copper, copper oxide, or a combination thereof, wherein the metal layer includes a first metal layer disposed on a surface of the support layer and including an adhesion enhancer and a first copper, and a second metal layer disposed on the first metal layer and including a second copper, and the adhesion enhancer includes a first moiety chemically bonded to the surface of the support layer and including a hydroxyalkylene group, and a second moiety including an amine group configured to adsorb the first copper.

## Description

### BACKGROUND

The present disclosure herein relates to a composite substrate for a rechargeable lithium battery and a rechargeable lithium battery including the same.

Lately, the rapid spread of battery-powered electronics, such as mobile phones, laptop computers, and electric vehicles, has driven a sharp rise in demand for rechargeable batteries provided with high energy density and high capacity. Accordingly, extensive research efforts are directed towards improving the performance of rechargeable lithium batteries.

Rechargeable lithium batteries include a positive electrode and a negative electrode, each including an active material that allows intercalation and deintercalation of lithium ions, and an electrolyte solution, and produce electrical energy from redox reactions that take place as lithium ions are intercalated into or deintercalated from the positive electrode and the negative electrode.

### SUMMARY

The present disclosure provides a composite substrate for a rechargeable lithium battery exhibiting improved adhesive strength between a metal layer and a support layer including a polymer film.

The present disclosure also provides a rechargeable lithium battery exhibiting excellent stability, including the composite substrate.

An embodiment of the present invention provides a composite substrate for a rechargeable lithium battery that may include a support layer including a polymer film, and a metal layer (disposed) on the support layer and including at least one of copper, copper oxide, or a combination thereof, wherein the metal layer may include a first metal layer (disposed) on a surface of the support layer and including an adhesion enhancer and a first copper, and a second metal layer (disposed) on the first metal layer and including a second copper, and the adhesion enhancer may include a first moiety chemically bonded to the surface of the support layer and including a hydroxyalkylene group, and a second moiety including an amine group configured to adsorb the first copper.

In an embodiment of the present invention, a method for preparing a composite substrate for a rechargeable lithium battery includes modifying a surface of a support layer, forming a first metal layer including a first copper on the modified surface of the support layer, and/or forming a second metal layer including a second copper on the first metal layer, wherein the forming of the first metal layer may include bonding a first compound including a glycidyl group to the modified surface of the support layer, bonding a second compound including an amine group to an end of the first compound to form an adhesion enhancer, impregnating the support layer with a first solution including first copper ions, and/or impregnating the support layer with a second solution including a reducing agent to reduce the first copper ions.

In an embodiment of the present invention, a rechargeable lithium battery includes the composite substrate for a rechargeable lithium battery, and a battery cell on the composite substrate, wherein the battery cell may include a first active material layer on the metal layer, a separator on the first active material layer, a second active material layer on the separator, and/or a metal substrate on the second active material layer.

### BRIEF DESCRIPTION OF THE FIGURES

The accompanying drawings are included to provide a further understanding of the present invention, and are incorporated in and constitute a part of this specification. The drawings illustrate embodiments of the present invention and, together with the description, serve to explain principles of the present invention. In the drawings:
FIG. 1 is a simplified conceptual view showing a rechargeable lithium battery according to embodiments of the present invention;
FIGS. 2 through 5 are schematic views each showing a rechargeable lithium battery according to an embodiment;
FIG. 6 is a cross-sectional view showing a rechargeable lithium battery including a composite substrate according to embodiments of the present invention;
FIG. 7 is a cross-sectional view showing the composite substrate of FIG. 6;
FIG. 8 is a view enlarging M of FIG. 7;
FIG. 9 is a cross-sectional view showing modifying a surface of a support layer according to embodiments of the present invention;
FIG. 10 is a view enlarging N of FIG. 9;
FIG. 11 is a conceptual view showing that a first compound is bonded to a surface of a support layer according to embodiments of the present invention;
FIG. 12 is a conceptual view showing that an adhesion enhancer is bonded to a surface of a support layer according to embodiments of the present invention;
FIG. 13 is a conceptual view showing a process of forming a first metal layer and a second metal layer according to embodiments of the present invention;
FIG. 14 is a view enlarging O of FIG. 13;
FIG. 15 is a conceptual view showing an interaction between an adhesion enhancer and copper ions according to embodiments of the present invention;
FIG. 16 is a view enlarging P of FIG. 13;
FIG. 17 is a view enlarging Q of FIG. 13; and
FIG. 18 is a flow chart illustrating a method for preparing a composite substrate for a rechargeable lithium battery, according to an example embodiment.

### DETAILED DESCRIPTION

In order to sufficiently understand the configuration and effects of the present invention, preferred embodiments of the present invention will be described with reference to the accompanying drawings. It should be noted, however, that the present invention is not limited to the following embodiments, and may be implemented in various forms and variously modified. The embodiments herein are provided so that the present invention will be thorough and complete and will fully convey the scope of the present invention to those skilled in the art.

Herein, it will be understood that when a component is referred to as being on another component, the component may be directly on another component, or an intervening third component may be present. In addition, in the drawings, thicknesses of components are exaggerated for effectively describing technical contents. Like reference numerals refer to like elements throughout.

Unless otherwise specified herein, the expression of singular form may include the expression of plural form. In addition, unless otherwise specified, the phrase "A or B" may indicate "A but not B", "B but not A", or "A and B". The terms "comprises" and/or "comprising" used herein do not exclude the presence or addition of one or more other components.

As used herein, the term "combination thereof" may refer to a mixture, a stack, a composite, a copolymer, an alloy, a blend, or a reaction product.

Unless otherwise defined herein, a particle diameter may be an average particle diameter. In addition, a particle diameter is defined as an average particle diameter (D50) indicating the diameter of particles at a cumulative volume of about 50 vol% in particle size distribution. The average particle diameter (D50) may be measured by a method widely known to those skilled in the art, for example, by a particle size analyzer, an image of transmission electron microscope (TEM), or an image of scanning electron microscope (SEM). Alternatively, the average particle diameter (D50) may be measured by a measurement device using dynamic light-scattering, wherein data analysis is conducted to count the number of particles for each particle size range, and an average particle diameter (D50) value may then be obtained through calculation. Also, a laser scattering method may be utilized to measure the average particle diameter. In the measuring using the laser diffraction method, more specifically, target particles are dispersed in a dispersion medium, then introduced into a commercially available laser diffraction particle diameter measuring device (e.g., MT 3000 available from Microtrac, Ltd.), and irradiated with ultrasonic waves of about 28 kHz at a power of about 60 W, and then an average particle diameter (D50) based on about 50% of the particle diameter distribution in the measuring device may be calculated.

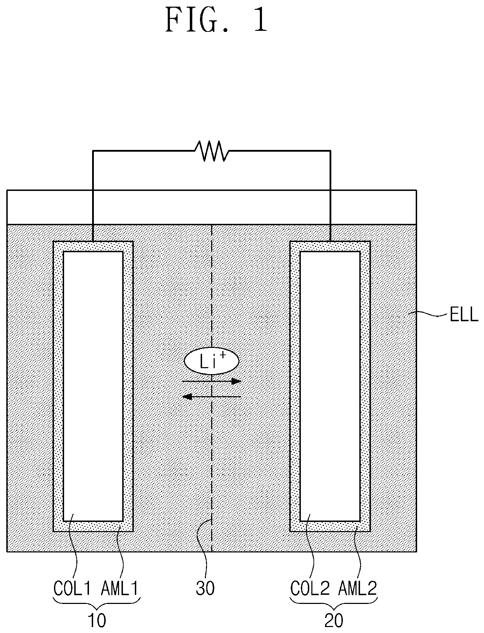

FIG. 1 is a simplified conceptual view showing a rechargeable lithium battery according to embodiments of the present invention. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and may further include a binder and/or a conductive material.

For example, the positive electrode 10 may further include an additive capable of serving as a sacrificial positive electrode.

The positive electrode active material layer AML1 may contain about 90 wt% to about 99.5 wt% of the positive electrode active material with respect to 100 wt% of the positive electrode active material layer AML1. With respect to 100 wt% of the positive electrode active material layer AML1, the binder and the conductive material may amount to about 0.5 wt% to about 5 wt%.

The binder may serve to attach positive electrode active material particles well to one another and also to attach the positive electrode active material well to the current collector COL1. Typical examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the embodiment of the present invention is not limited thereto.

The conductive material may be used to impart conductivity to the electrode. Any material that does not cause chemical changes and is an electron conductive material may be usable in batteries. Examples of the conductive material may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, and the like in the form of a metal powder or a metal fiber; a conductive polymer such as a polyphenylene derivative; or a mixture thereof.

Al may be used as the current collector COL1, but the embodiment of the present invention is not limited thereto.

### Positive Electrode Active Material

A compound capable of reversibly intercalating and deintercalating lithium (lithiated intercalation compound) may be used as a positive electrode active material in a positive electrode active material layer AML1. Specifically, at least one of a complex oxide of lithium and a metal selected from cobalt, manganese, nickel, and a combination thereof may be used.

The complex oxide may be a lithium transition metal complex oxide, and specific examples thereof include lithium nickel-based oxide, lithium cobalt-based oxide, lithium manganese-based oxide, lithium iron phosphate-based compound, cobalt-free nickel-manganese-based oxide, or a combination thereof.

For example, a compound represented by any one among Formulas below may be used. LiₐA₁₋₃X₃O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn₁₋₃G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In Formulas above, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L¹ is Mn, Al, or a combination thereof.

For example, the positive electrode active material may be a high nickel-based positive electrode active material having a nickel content of about 80 mol% or greater, about 85 mol% or greater, about 90 mol% or greater, about 91 mol% or greater, or about 94 mol% or greater, with respect to 100 mol% of metals excluding lithium from the lithium transition metal complex oxide. The high nickel-based positive electrode active material may achieve high capacity and thus be applied to high-capacity, high-density rechargeable lithium batteries.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material.

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity to the electrode. Any material that does not cause chemical changes and is an electron conductive material may be usable in batteries. Examples of the conductive material may include: a carbon-based material such as natural graphite, artificial graphite, carbon black, acetylene black, Ketjen black, a carbon fiber, a carbon nanofiber, and carbon nanotube; a metal-based material including copper, nickel, aluminum, silver, etc., in the form of a metal powder or a metal fiber; a conductive polymer such as a polyphenylene derivative; or a mixture thereof.

The current collector COL2 may be selected from a copper foil, a nickel foil, a stainless steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that reversibly intercalates/deintercalates lithium ions, a lithium metal, a lithium metal alloy, a material capable of doping/de-doping lithium, or a transition metal oxide.

The material that reversibly intercalates/deintercalates lithium ions may include a carbon-based negative electrode active material, for example, crystalline carbon, amorphous carbon, or a combination thereof. Examples of the crystalline carbon may be graphite such as irregular, planar, flaky, spherical, or fibrous natural graphite or artificial graphite, and examples of the amorphous carbon may be soft carbon, hard carbon, mesophase pitch carbide, fired cokes, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or an Sn-based negative electrode active material. The Si-based negative electrode active material may include silicon, a silicon-carbon composite, SiOx (0 < x < 2), a Si-Q alloy (where Q is selected from an alkali metal, an alkaline earth metal, a Group 13 element, a Group 14 element (except for Si), a Group 15 element, a Group 16 element, a transition metal, a rare-earth element, and a combination thereof), or a combination thereof. The Sn-based negative electrode active material may be Sn, SnO₂, an Sn-based alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include a secondary particle (core), in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like, and the aprotic solvent may include nitriles such as R-CN (where R is a C2 to C20 linear, branched, or cyclic hydrocarbon group and may include a double bond, an aromatic ring, or an ether group); amides such as dimethylformamide; dioxolanes such as 1,3-dioxolane, 1,4-dioxolane; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Typical examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Rechargeable Lithium Battery

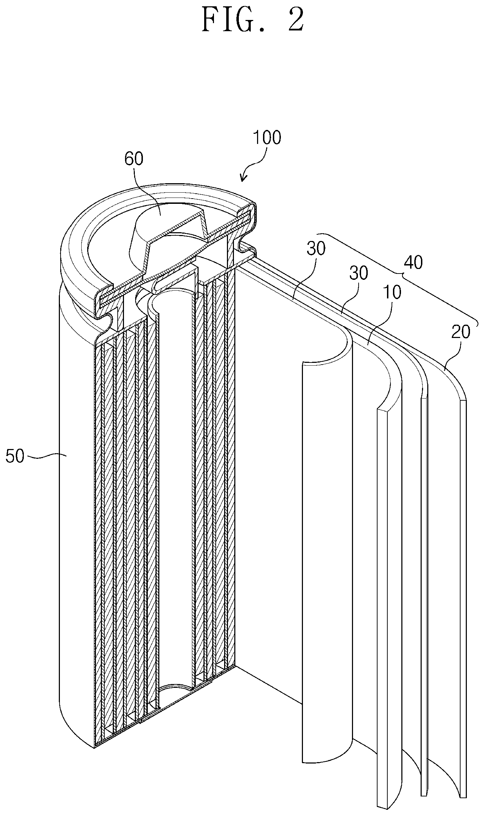

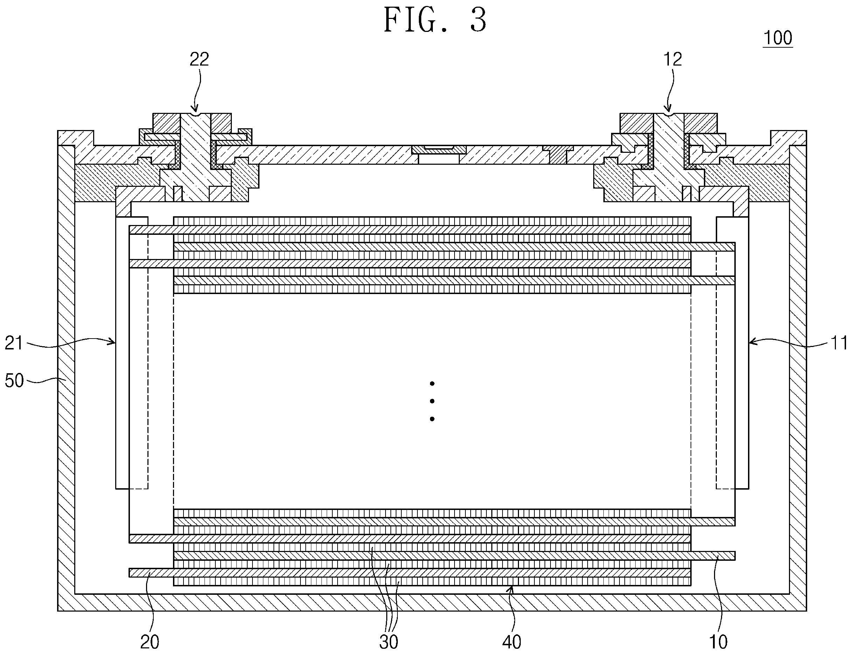

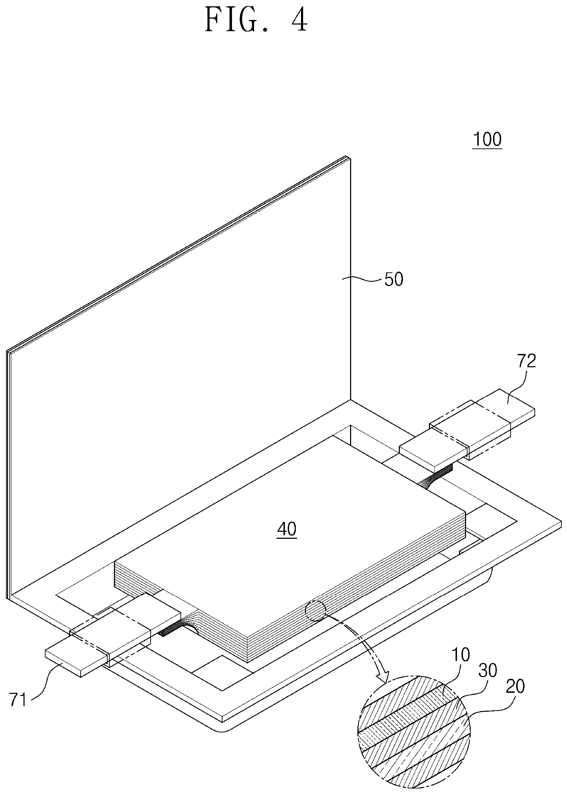

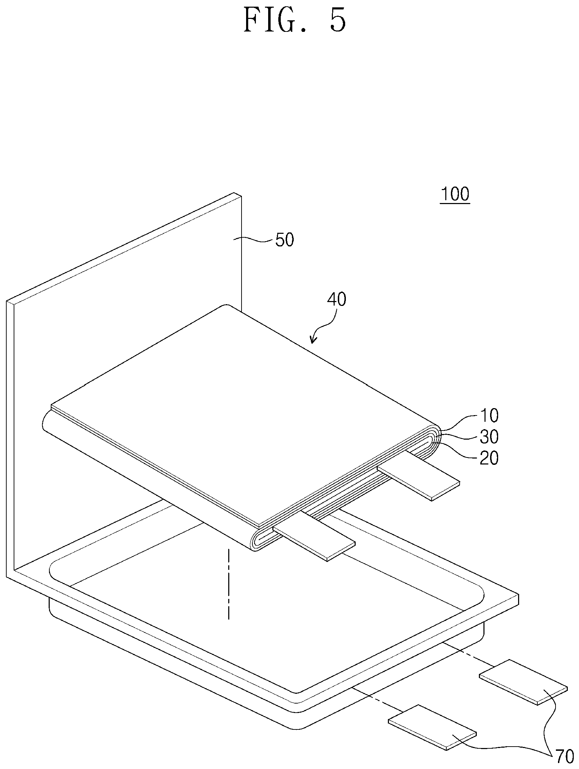

The rechargeable lithium battery may be classified into cylindrical, prismatic, pouch, or coin-type batteries, and the like depending on their shape. FIGS. 2 to 5 are schematic views showing a rechargeable lithium battery according to an embodiment, and FIG. 2 shows a cylindrical battery, FIG. 3 shows a prismatic battery, and FIGS. 4 and 5 show pouch-type batteries. Referring to FIGS. 2 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

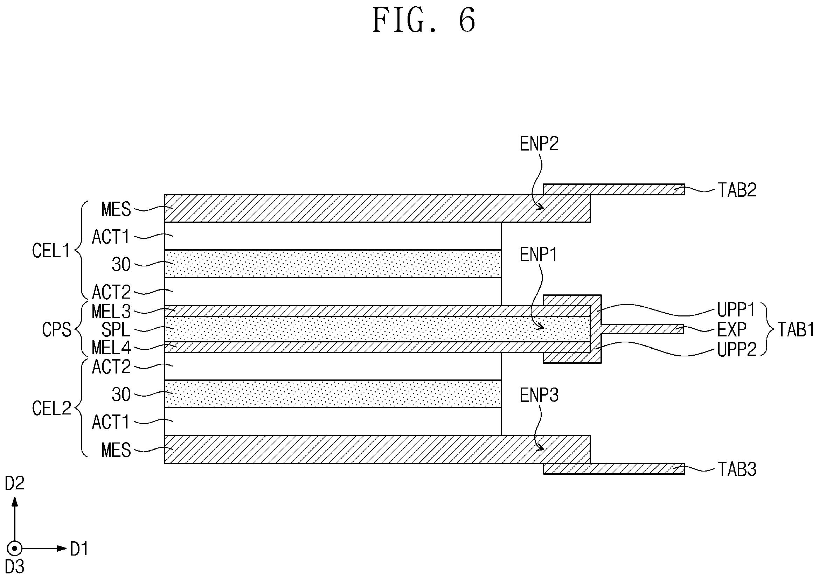

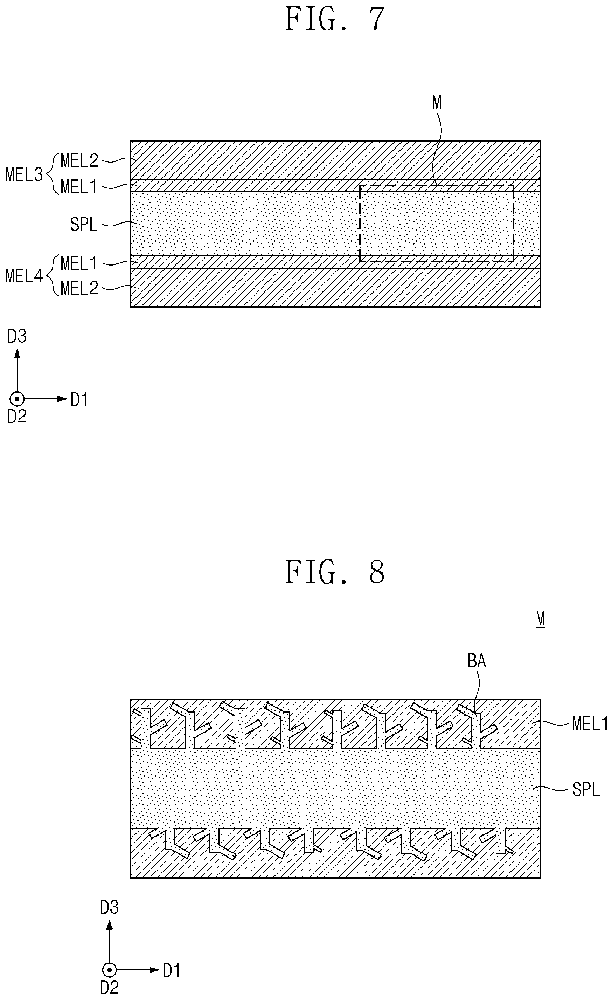

FIG. 6 is a cross-sectional view showing a rechargeable lithium battery including a composite substrate according to embodiments of the present invention. FIG. 7 is a cross-sectional view showing the composite material of FIG. 6. FIG. 8 is a view enlarging M of FIG. 7. To simplify descriptions, any description overlapping with that of the rechargeable lithium battery described with reference to FIGS. 1 to 5 will not be provided again.

Referring to FIG. 6, a composite substrate CPS, a first battery cell CEL1 on one surface of the composite substrate CPS, and a second battery cell CEL2 on the other surface of the composite substrate CPS may be provided. The first battery cell CEL1, the second battery cell CEL2, and the composite substrate CPS in FIG. 6 may constitute one bicell. The first battery cell CEL1, the second battery cell CEL2, and the composite substrate CPS in FIG. 6 may constitute the electrode assembly 40 described above with reference to FIGS. 3 to 5.

The first battery cell CEL1 and the second battery cell CEL2 may each include a first active material layer ACT1, a separator 30, a second active material layer ACT2, and a metal substrate MES. The first active material layer ACT1 may be provided on the composite substrate CPS. The second active material layer ACT2 may be spaced apart from the first active material layer ACT1 with the separator 30 therebetween. The metal substrate MES may be provided on the second active material layer ACT2.

The first active material layer ACT1 may be either the positive electrode active material layer AML1 or the negative electrode active material layer AML2 described above with reference to FIG. 1. The second active material layer ACT2 may be the other one of the positive electrode active material layer AML1 and the negative electrode active material layer AML2 described above with reference to FIG. 1. In an embodiment of the present invention, the first active material layer ACT1 may be the positive electrode active material layer AML1, and the second active material layer ACT2 may be the negative active material layer AML2. The metal substrate MES may be the current collector COL1 or COL2 described above with reference to FIG. 1.

The composite substrate CPS may include a support layer SPL, and a third metal layer MEL3 and a fourth metal layer MEL4 each provided on both sides of the support layer SPL. The composite substrate CPS may include about 20 wt% to about 30 wt% of the support layer SPL with respect to the composite substrate.

The third metal layer MEL3 of the composite substrate CPS may be in contact with the first active material layer ACT1 of the first battery cell CEL1. The fourth metal layer MEL4 of the composite substrate CPS may be in contact with the first active material layer ACT1 of the second battery cell CEL2. The third metal layer MEL3 and the fourth metal layer MEL4 of the composite substrate CPS may correspond to the current collector COL1 or COL2 described above with reference to FIG. 1.

The support layer SPL may include a polymer film. For example, the support layer SPL may have a thickness of about 2 µm to about 10 µm. For example, the support layer SPL may include a polyethylene film, a polypropylene film, a polyvinylidene chloride film, or a multilayer film containing a combination thereof. The support layer SPL may have excellent ion permeability and excellent mechanical strength.

The third metal layer MEL3 and the fourth metal layer MEL4 may each include at least one of aluminum, aluminum alloy, copper, copper alloy, nickel, nickel alloy, titanium, titanium alloy, iron, iron alloy, silver, or silver alloy.

In an embodiment of the present invention, the third metal layer MEL3 and the fourth metal layer MEL4 may each have a thickness of about greater than 0 µm and about 5 µm or less. For example, the third metal layer MEL3 and the fourth metal layer MEL4 may each have a thickness of about 200 nm to about 5 µm. The support layer SPL may have a thickness of about 2 µm to about 10 µm. The thickness of the support layer SPL may be greater than the thicknesses of each of the third layer MEL3 and the fourth metal layer MEL4.

The composite substrate CPS may include a first end ENP1 at one end thereof. The metal substrate MES of the first battery cell CEL1 may include a second end ENP2 at one end thereof. The metal substrate MES of the second battery cell CEL2 may include a third end ENP3 at one end thereof.

A first tab TAB1 may be provided at the first end ENP1 of the composite substrate CPS. The first tab TAB1 may include a first connection portion UPP1, a second connection portion UPP2, and an extension portion EXP. The first connection portion UPP1 may be in contact with the third metal layer MEL3 of the composite substrate CPS. The second connection portion UPP2 may be in contact with the fourth metal layer MEL4 of the composite substrate CPS. The extension portion EXP may connect the first connection portion UPP1 and the second connection portion UPP2 together. The extension portion EXP may extend horizontally from the first end ENP1 toward the first direction D1.

The third metal layer MEL3 and the fourth metal layer MEL4 may be electrically connected through the first tab TAB1. The first tab TAB1 may commonly apply voltage to the third metal layer MEL3 and the fourth metal layer MEL4.

A second tab TAB2 may be provided at the second end ENP2 of the metal substrate MES. The second tab TAB2 may apply voltage to the metal substrate MES of the first battery cell CEL1. A third tab TAB3 may be provided at the third end ENP3 of the metal substrate MES. The third tab TAB3 may apply voltage to the metal substrate MES of the second battery cell CEL2.

The first tab TAB1 may constitute any one of the positive electrode tab (or positive electrode lead tab) and the negative electrode tab (or negative electrode lead tab) described above with reference to FIGS. 2 to 4. The second tab TAB2 and the third tab TAB3 may constitute the other one of the positive electrode tab (or positive electrode lead tab) and the negative electrode tab (or negative electrode lead tab) described above with reference to FIGS. 2 to 4.

Referring to FIGS. 7 and 8, the support layer SPL may include a plurality of bonding portions BA. The plurality of bonding portions BA may each have an irregular shape and have a three-dimensional structure. More specifically, the plurality of bonding portions BA may each include a protruding form in a direction perpendicular to a surface PW_U of the support layer SPL (e.g., a third direction D3) and/or in a direction parallel to a surface of the support layer SPL (e.g., a first direction D1 or a second direction D2). The plurality of bonding portions BA may each be spaced apart along the first direction D1 and/or the second direction D2.

The third and fourth metal layers MEL3 and MEL4 may be disposed on both surfaces of the support layer SPL. Each of the third and fourth metal layers MEL3 and MEL4 may include a first metal layer MEL1 and a second metal layer MEL2 on the first metal layer MEL1.

The first metal layer MEL1 may be disposed on a surface of the support layer SPL and may include an adhesion enhancer and a first copper. The first metal layer MEL1 may have a thickness of about 2 nm to about 5 nm. The adhesion enhancer may be chemically bonded to the surface of the support layer SPL and may be chemically bonded to the plurality of bonding portions BA.

The adhesion enhancer may include a first moiety chemically bonded to the surface of the support layer SPL and including a hydroxyalkylene group, and a second moiety including an amine group configured to adsorb the first copper. The hydroxyalkylene group may indicate a structure in which a hydroxy functional group (-OH) is bonded to an alkylene chain (CₙH₂ₙ). The amine group may indicate a group including an amine functional group. For example, the amine group may indicate an alkyl group (CₙH₂ₙ₊₁) or an alkylene group (CₙH₂ₙ) including an amine functional group (e.g., -NH- or -NH2).

The adhesion enhancer may include a compound of Formula 1 below.

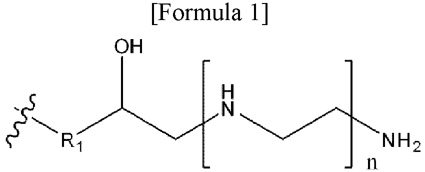

The R1 is any one selected from the group consisting of C₁ to C₁₀ alkylene groups, and the n may be 1 to 10. A wavy line shown in Formula 1 may be a portion chemically bonded to a functional group on the surface of the support layer SPL or a polymer on the surface of the support layer SPL. For example, the wavy line may be a portion chemically bonded to a functional group containing oxygen on the surface of the plurality of bonding portions BA (e.g., -O²⁻, -COOH, or -OH).

The first moiety may include Formula 2 below.

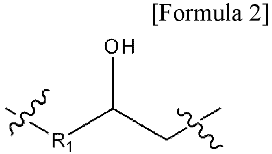

As described above, the wavy line adjacent to R1 may be a portion chemically bonded to a functional group on the surface of the support layer SPL or an attached polymer on the surface of the support layer SPL. The other wavy line may be a portion chemically bonded to a second moiety.

The second moiety may include Formula 3 below.

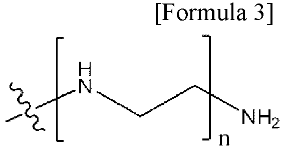

A wavy line shown in Formula 3 may be a portion chemically connected to the first moiety. Amine groups of the second moiety may stabilize copper ions. For example, the copper ions may be stabilized by amine groups having a free electron pair that may be bonded to the copper ions. For example, the copper ions may be stabilized by chelate formation through coordination bonding with amine groups. The second moiety may allow first copper ions, which will be described later, to be adsorbed onto an adhesion enhancer.

The second metal layer MEL2 may include a second copper. The second metal layer MEL2 may have a greater thickness than the first metal layer MEL1. The second metal layer MEL2 may have a thickness of about 150 nm to about 3 µm. A bonding strength between the support layer SPL and the third metal layer MEL3 (or the fourth metal layer MEL4 ) may be about 700 N/m to about 1200 N/m.

According to embodiments of the present invention, the first metal layer MEL1 may include an adhesion enhancer. The adhesion enhancer may include a first moiety containing a hydroxyalkylene group and a second moiety containing an amine group configured to adsorb a first copper. Copper ions may be stably adsorbed onto the adhesion enhancer through the second moiety. The support layer SPL and the metal layers MEL3 and MEL4 may provide excellent adhesive strength through the first moiety and the second moiety.

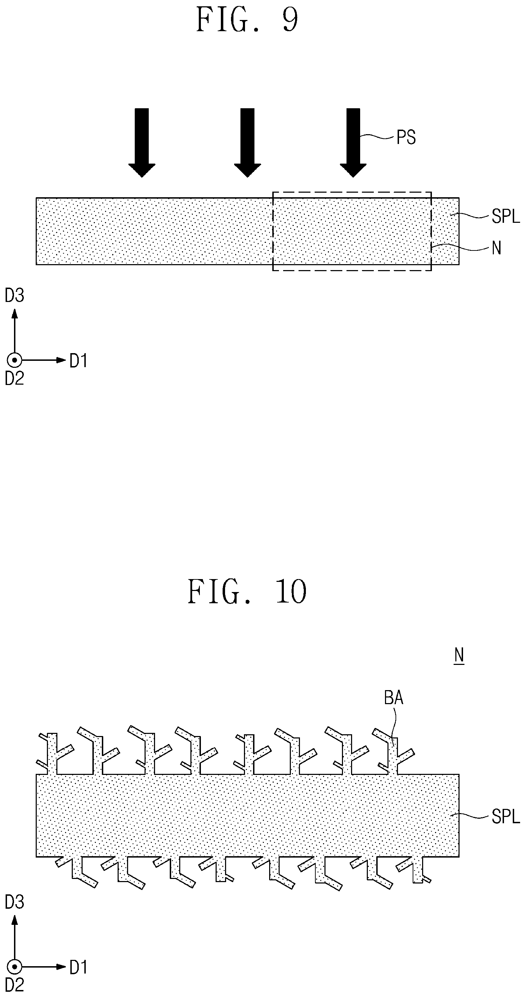

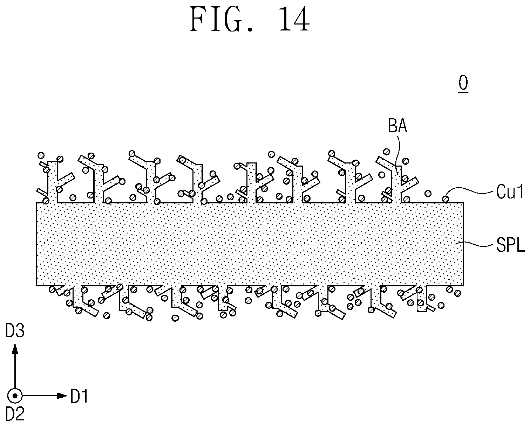

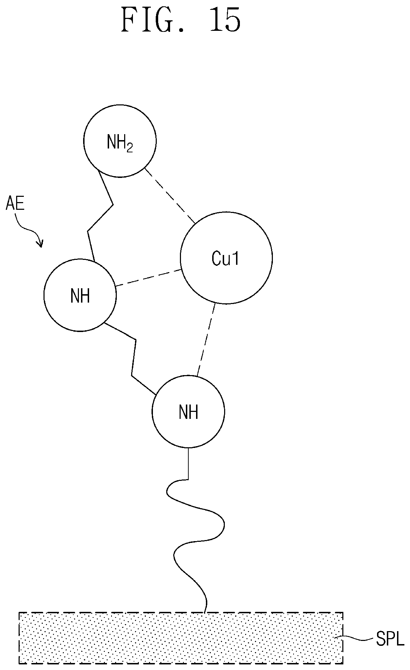

FIGS. 9 through 17 are cross-sectional views showing a method for preparing a composite material for a rechargeable lithium battery according to embodiments of the present invention. To simplify descriptions, any description overlapping with that of the rechargeable lithium battery described with reference to FIGS. 1 to 9 will not be provided again.

Referring to FIG. 9, a support layer SPL including a polymer film may be provided. A surface of the support layer SPL may be modified. Modifying a surface PS may involve, for example, plasma treatment or acid treatment. The plasma treatment may include, for example, oxygen gas and argon gas.

Referring to FIG. 10, the modified surface of the support layer SPL may include a plurality of bonding portions BA of the support layer SPL. The plurality of bonding portions BA may each have an irregular shape and have a three-dimensional structure. The plurality of bonding portions BA may be formed through physical stimulation of plasma or through chemical stimulation by acid treatment.

The plurality of bonding portions BA may each include a functional group including oxygen on the surface thereof. The functional group including oxygen may include, for example, at least any one selected from the group consisting of -O²⁻, -OH, and -COOH.

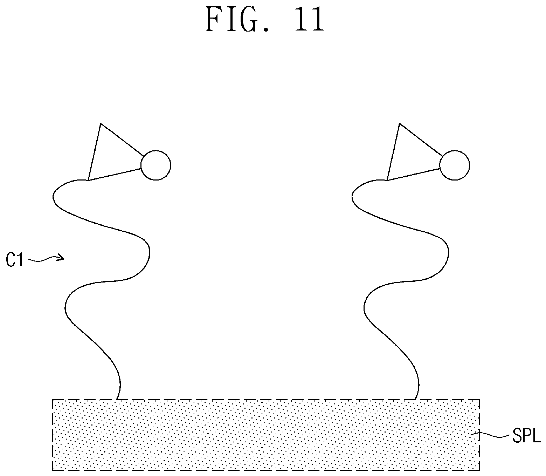

Referring to FIG. 11, a first compound C1 including a glycidyl group may be bonded (e.g., chemically bonded) to the modified surface of the support layer SPL. An end other than an epoxy functional group of the first compound C1 may be chemically bonded to the modified surface of the support layer SPL. The first compound C1 may be chemically bonded to a functional group including oxygen of each of the plurality of bonding portions. For example, the first compound C1 may be chemically bonded to any one among -O²-, -OH, and -COOH. The first compound C1 may be, for example, glycidyl methacrylate, glycidyl methyl ether, poly glycidyl methacrylate, or a combination thereof.

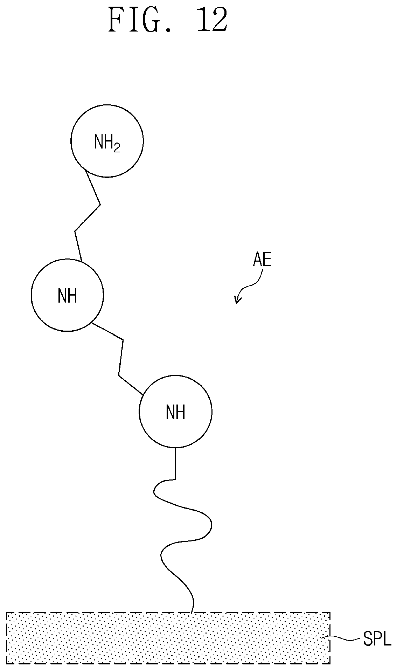

Referring to FIG. 12, an adhesion enhancer AE may be formed on the surface of the support layer SPL. A second compound including an amine group may be bonded to an epoxy functional group of the first compound to form the adhesion enhancer AE. For example, the second compound may be diethylenetriamine (DETA). The adhesion enhancer AE may be formed through Reaction Formula 1 below.

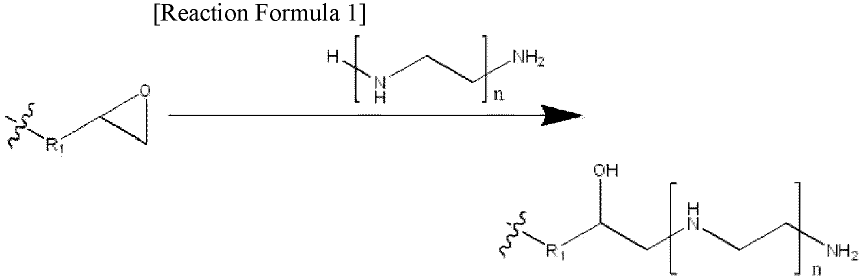

The R1 is any one selected from the group consisting of C₁ to C₁₀ alkylene groups, and n may be an integer between 0 and 10.

The forming of the adhesion enhancer AE may be performed at about 60 °C to about 80 °C. That is, Reaction Formula 1 above may be performed at about 60 °C to about 80 °C. A wavy line shown in Reaction Formula 1 above may be a portion chemically bonded to a functional group on the surface of the support layer SPL or a polymer on the surface of the support layer SPL.

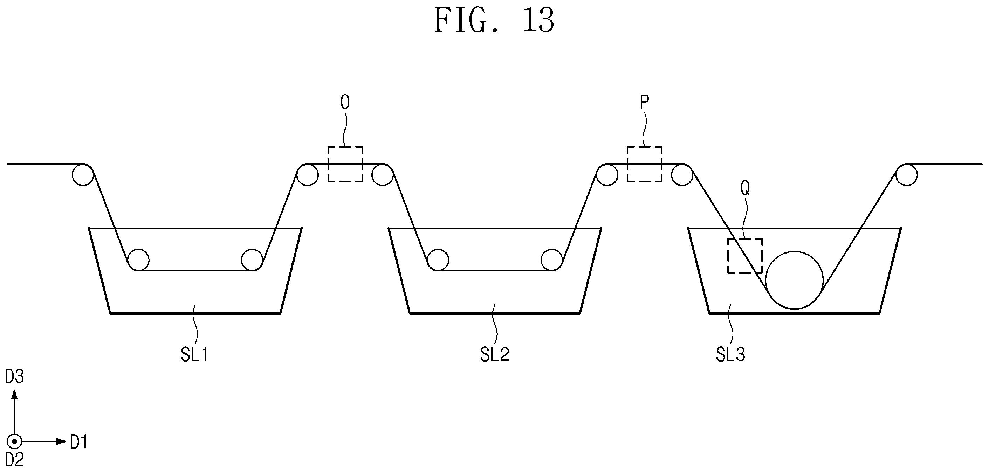

Referring to FIGS. 13, 14, and 15, the support layer SPL may be impregnated with a first solution SL1 containing first copper ions. The first copper ions may be adsorbed onto the adhesion enhancer AE. The first solution SL1 may include a first metal salt including a first copper ion Cu1 and a catalyst. The first metal salt may be, for example, any one of CuSO₄ and CuCl₂. The metal salt in the first solution SL1 may be present, for example, at a concentration of about 0.12 M to about 0.25 M. The catalyst may be, for example, at least any one selected from the group consisting of palladium (Pd) and platinum (Pt). The first solution may have a pH of about 3 to about 5. When the pH of the first solution satisfies the numerical range described above, the first copper ion adsorbed onto the adhesion enhancer AE may increase in amount and may be uniformly adsorbed.

The first copper ion Cu1 may be stabilized by the second moiety of the adhesion enhancer AE. The first copper ion Cu1 may be stabilized by amine groups of the second moiety (e.g., -NH- or -NH2). For example, the first copper ion Cu1 may be stabilized by amine groups having a free electron pair that may be bonded to the first copper ion Cu1. For example, the first copper ion Cu1 may be stabilized by chelate formation through coordination bonding with an amine group.

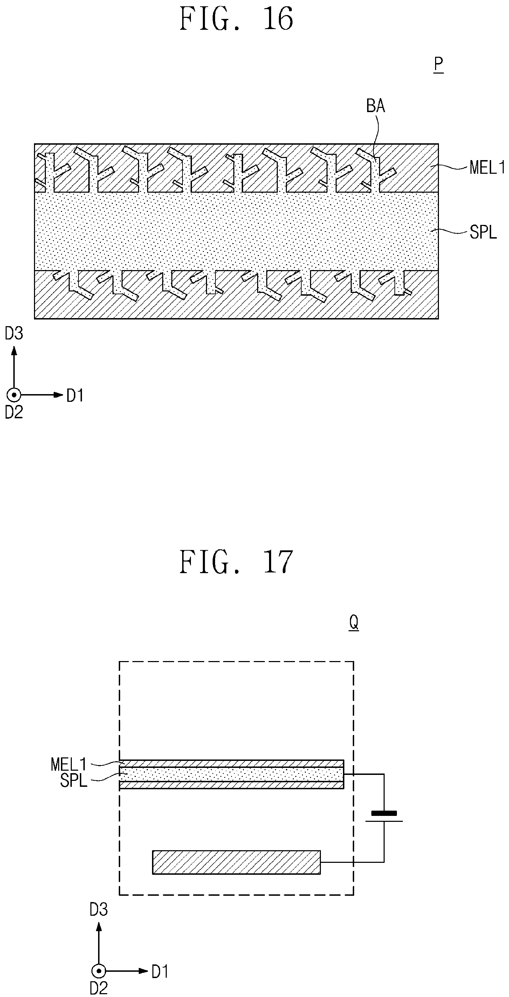

Referring to FIGS. 13 and 16, a first metal layer MEL1 may be formed. Forming the first metal layer MEL1 may include impregnating the support layer SPL with a second solution SL2 containing a reducing agent.

The reducing agent may include, for example, at least one selected from the group consisting of formaldehyde, glucose, sodium hypophosphate, and a boron compound. The second solution SL2 may further include a complexing agent, a stabilizer, and a pH regulator. The complexing agent may include, for example, EDTA. The stabilizer may include, for example, at least any one of TEA or 2,2'-bipridine. The pH regulator may include, for example, NaOH. The second solution SL2 may have, for example, a pH of about 11 to about 13. When the pH of the second solution SL2 satisfies the numerical range described above, the first metal layer MEL1 may be uniformly formed on the surface of the support layer SPL.

Referring to FIGS. 13 and 17, the second metal layer MEL2 may be formed on the first metal layer MEL1. Forming the second metal layer MEL2 may include impregnating the support layer SPL and the first metal layer MEL1 on the support layer SPL with a third solution SL3 containing second copper ions.

Referring to FIG. 17, the forming of the second metal layer MEL2 may be performed, for example, through a water electroplating process. The support layer SPL and the first metal layer MEL1 on the support layer SPL may be connected to a negative electrode, and a copper electrode containing second copper ions may be used as a positive electrode. In this case, a constant voltage of about 5 V to about 15 V may be applied.

The third solution SL3 may further include an electrolyte, a complexing agent, and a pH regulator. The electrolyte may include, for example, at least any one selected from the group consisting of copper sulfate (CuSO₄), sulfuric acid (H₂SO₄), hydrochloric acid (HCl), copper chloride (CuCl₂), and acetic acid (C₂H₄O₂). The complexing agent may include, for example, EDTA. The pH regulator may include, for example, at least any one selected from the group consisting of hydrochloric acid, acetic acid, sulfuric acid, and citric acid. The third solution SL3 may have, for example, a pH of about 0.5 to about 2.5. When the third solution SL3 satisfies the numerical range described above, the second metal layer MEL2 may be uniformly formed on the first metal layer MEL1.

The first metal layer MEL1 and the second metal layer MEL2 contain the same metal (e.g., copper), and accordingly, the second metal layer MEL2 may be stably formed on the first metal layer MEL1.

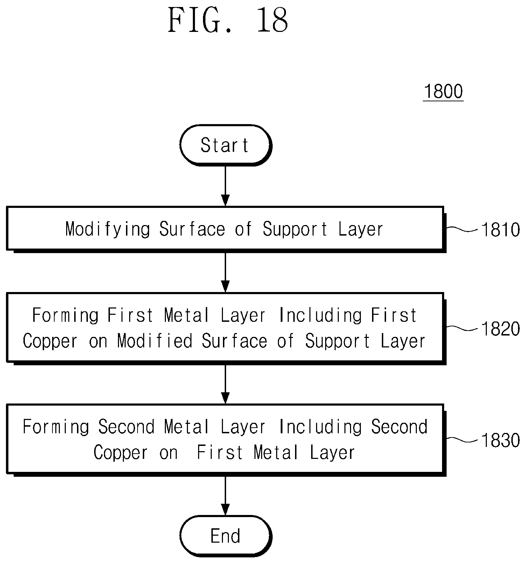

FIG. 18 is a flow chart illustrating a method for preparing a composite substrate for a rechargeable lithium battery, according to an example embodiment. In FIG. 18, the method 1800 includes operation 1810 which includes modifying a surface of a support layer. For example, modifying the surface of the support layer includes performing at least one of plasma treatment and acid treatment. In another example, the modified surface of the support layer includes at least one of -O²-, -OH, and - COOH. In an example, the support layer includes a polymer film, and the polymer film includes at least one of a polyethylene film, a polypropylene film, a polyvinylidene chloride film, and a multilayer film including a combination thereof.

Operation 1820 includes forming a first metal layer including a first copper on the modified surface of the support layer. For example, the forming of the first metal layer includes bonding a first compound including a glycidyl group to the modified surface of the support layer, bonding a second compound including an amine group to an end of the first compound to form an adhesion enhancer, impregnating the support layer with a first solution including first copper ions, and impregnating the support layer with a second solution including a reducing agent to reduce the first copper ions. In an example, the first solution has a pH in a range of about 3 to about 5. For example, the reducing agent of the second solution includes at least one of formaldehyde, glucose, sodium hypophosphate, and boron compounds. In another example, forming the adhesion enhancer is performed at a temperature in a range of about 60 °C to about 80 °C.

In an example, the adhesion enhancer includes a compound of Formula 1: 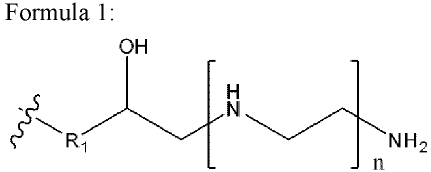 wherein R1 includes one of C₁ to C₁₀ alkylene groups, and n is a natural number that is equal to or greater than 1. In an example, n is equal to 2.

Operation 1830 includes forming a second metal layer including a second copper on the first metal layer. In an example, forming the second metal layer includes impregnating the support layer and the first metal layer on the support layer with a third solution including second copper ions. For example, the third solution further includes an electrolyte, a complexing agent, and a pH regulator, and the electrolyte includes at least one of copper sulfate (CuSO₄), sulfuric acid (H₂SO₄), hydrochloric acid (HCl), copper chloride (CuCl₂), and acetic acid (C₂H₄O₂).

The present invention is described below through Examples and Comparative Examples.

### Example 1

A 2 µm thick polypropylene film was prepared as a support layer. A surface of the support layer was treated with oxygen plasma and argon plasma. The plasma-treated support layer was impregnated with a solution containing 0.1 M glycidyl methacrylate and using ethanol as a solvent. The support layer was impregnated with a solution containing 0.2 M diethylenetriamine and using water as a solvent, and then heated to 80 °C to form an adhesion enhancer on the support layer.

Thereafter, the support layer was impregnated with a first solution containing 0.12 M CuSO₄ and palladium (Pd). Then, the support layer was impregnated with a second solution containing formaldehyde, EDTA, TEA, and NaOH to form a first metal layer. 0.1 M formaldehyde, 0.01 M EDTA, 0.02 M TEA, and 0.2 M NaOH were mixed to prepare a second solution. The second solution had a pH of 11. The first metal layer had a thickness of 3 nm.

The first metal layer and the support layer were impregnated with a third solution. 0.12 M CuSO₄, 0.01 M EDTA, and 0.15 M acetic acid were mixed to prepare a third solution. A negative electrode was connected to a positive electrode made of copper metal on the first metal layer and the support layer, and a constant voltage of 6 V was applied. Subsequently, a second metal layer was formed on the first metal layer. The first metal layer and the second metal layer had a total thickness of 12 µm.

### Example 2

A composite substrate was prepared in the same manner as in Example 1, except that a polyethylene film was used as the support layer.

### Comparative Example 1

A 2 µm thick polypropylene film was prepared as a support layer. The support layer was deposited with a first metal layer made of a nickel-chromium alloy through a sputtering process. The nickel-chromium alloy had a thickness of 13 µm. Thereafter, a second metal layer was formed in the same manner as in Example.

### Comparative Example 2

A 2 µm thick polyethylene film was prepared as a support layer. The support layer was deposited with a first metal layer made of a nickel-chromium alloy through a sputtering process. The nickel-chromium alloy had a thickness of 13 µm. Thereafter, a second metal layer was formed in the same manner as in Example.

### Evaluation Example

The support layer was fixed, and the first metal layer was pulled at an angle of 90°, and adhesive strength was measured in accordance with the standard of ASTM D6862. The results of the adhesive strength evaluation are shown in Table 1 below.

**[Table 1]**

| | Adhesive strength (N/m) |
|---|---|
| Example 1 | 900 |
| Example 2 | 1130 |
| Comparative Example 1 | 650 |
| Comparative Example 2 | 1000 |

Referring to Table 1, it is determined that Example 1 shows greater adhesive strength than Comparative Example 1. Similarly, it is determined that Example 2 shows greater adhesive strength than Comparative Example 2. That is, it is determined that the composite substrate according to embodiments of the present invention has greater stability.

According to embodiments of the present invention, a composite substrate may include a support layer and a metal layer.

The metal layer may include a first metal layer containing an adhesion enhancer.

The adhesion enhancer may include a first portion containing a hydroxyalkylene group and a second portion containing an amine group configured to adsorb a first copper.

The support layer and the first metal layer may be stably bonded through the first portion, and copper ions may be stably adsorbed onto the support layer through the second portion.

The support layer and the metal layer may provide excellent adhesive strength through the first portion and the second portion.

Furthermore, a rechargeable lithium battery exhibiting excellent stability, including the composite substrate, may be provided.

Although the embodiments of the present invention have been described above with reference to the accompanying drawings, the present invention may be applied in other specific forms without changing the technical idea or essential features thereof. Therefore, the above-described embodiments are to be considered in all aspects as illustrative and not restrictive.

## Claims

1. A composite substrate for a rechargeable lithium battery comprising:
a support layer comprising a polymer film; and
a metal layer disposed on the support layer and comprising at least any one of copper, copper oxide, or a combination thereof,
wherein the metal layer comprises:
a first metal layer disposed on a surface of the support layer and comprising an adhesion enhancer and a first copper; and
a second metal layer disposed on the first metal layer and comprising a second copper, and
the adhesion enhancer comprises:
a first moiety chemically bonded to the surface of the support layer and comprising a hydroxyalkylene group; and
a second moiety comprising an amine group configured to adsorb the first copper.

2. The composite substrate for a rechargeable lithium battery of claim 1, wherein the adhesion enhancer comprises a compound of Formula 1 below: 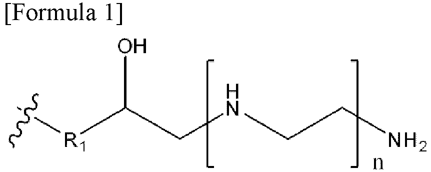
the R1 is any one selected from the group consisting of direct bonding or a C₁ to C₁₀ alkylene group, and
the n is an integer between 0 and 10, in particular wherein the n is 2.

3. The composite substrate for a rechargeable lithium battery of claim 1 or 2, wherein a bonding strength between the metal layer and the support layer is 700 N/m to 1200 N/m; orwherein the first metal layer has a thickness of about 2 nm to about 5 nm.

4. The composite substrate for a rechargeable lithium battery of any one of claims 1 to 3, further comprising a negative electrode coating layer on the metal layer,
wherein the negative electrode coating layer comprises a negative electrode active material, a binder, and a conductive material.

5. The composite substrate for a rechargeable lithium battery of any one of claims 1 to 4, wherein the polymer film comprises at least one selected from the group consisting of a polyethylene film, a polypropylene film, a polyvinylidene chloride film, and a multilayer film containing a combination thereof.

6. The composite substrate for a rechargeable lithium battery of any one of claims 1 to 5, wherein the support layer has a thickness of 2 µm to 10 µm.

7. A method for preparing a composite substrate for a rechargeable lithium battery, the method comprising:
modifying a surface of a support layer;
forming a first metal layer comprising a first copper on the modified surface of the support layer; and
forming a second metal layer comprising a second copper on the first metal layer,
wherein the forming of the first metal layer comprises:
bonding a first compound comprising a glycidyl group to the modified surface of the support layer;
bonding a second compound comprising an amine group to an end of the first compound to form an adhesion enhancer;
impregnating the support layer with a first solution comprising first copper ions; and
impregnating the support layer with a second solution comprising a reducing agent to reduce the first copper ions.

8. The method of claim 7, wherein the modifying of the surface of the support layer involves any one of plasma treatment and acid treatment; or
wherein the modified surface of the support layer comprises at least any one selected from the group consisting of -O²-, -OH, and -COOH.

9. The method of claim 7 or 8, wherein the adhesion enhancer comprises a compound of Formula 1 below: 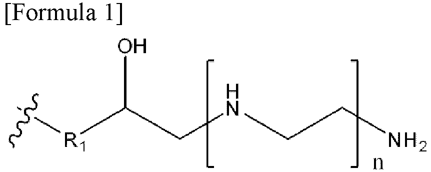
the R1 is any one of C₁ to C₁₀ alkylene groups, and
the n is a natural number of 1 or greater, in particular wherein the n is 2.

10. The method of any one of claims 7 to 9, wherein the reducing agent of the second solution comprises at least one selected from the group consisting of formaldehyde, glucose, sodium hypophosphate, and boron compounds.

11. The method of any one of claims 7 to 10, further comprising forming a second metal layer on the first metal layer,
wherein the forming of the second metal layer comprises impregnating the support layer and the first metal layer on the support layer with a third solution comprising second copper ions, in particular wherein the third solution further comprises an electrolyte, a complexing agent, and a pH regulator, and
the electrolyte comprises at least one selected from the group consisting of copper sulfate (CuSO₄), sulfuric acid (H₂SO₄), hydrochloric acid (HCl), copper chloride (CuCl₂), and acetic acid (C₂H₄0₂).

12. The method of any one of claims 7 to 11, wherein the first solution has a pH of about 3 to about 5.

13. The method of any one of claims 7 to 12, wherein the forming of the adhesion enhancer is performed at about 60 °C to about 80 °C.

14. The method of any one of claims 7 to 13, wherein the support layer comprises a polymer film, and
the polymer film comprises at least one selected from the group consisting of a polyethylene film, a polypropylene film, a polyvinylidene chloride film, and a multilayer film containing a combination thereof.

15. A rechargeable lithium battery comprising:
the composite substrate of any one of claims 1 to 6; and
a battery cell on the composite substrate,
wherein the battery cell comprises:
a first active material layer on the metal layer;
a separator on the first active material layer;
a second active material layer on the separator; and
a metal substrate on the second active material layer.
